Europäisches Patentamt

European Patent Office

Office européen des brevets

(11) Veröffentlichungsnummer: **0 251 119 B1**

## (12) EUROPÄISCHE PATENTSCHRIFT

(45) Veröffentlichungstag der Patentschrift: **11.11.92**

(21) Anmeldenummer: **87108950.4**

(22) Anmeldetag: **23.06.87**

(51) Int. Cl.⁵: **G11B 7/24**

(54) **Lichtempfindliches Aufzeichnungs-material.**

(30) Priorität: **27.06.86 DE 3621685**

(43) Veröffentlichungstag der Anmeldung:
**07.01.88 Patentblatt 88/01**

(45) Bekanntmachung des Hinweises auf die
Patenterteilung:
**11.11.92 Patentblatt 92/46**

(84) Benannte Vertragsstaaten:
**DE FR GB NL**

(56) Entgegenhaltungen:
**EP-A- 230 240**
**EP-A- 0 025 253**

**KOLLOID-ZEITSCHRIFT, Bd. 239, Nr. 2, 1970,**
**Darmstadt, S. 677-681; A. KOTERA u.a.**
**"Colloid chemical studies of polystyrene la-**
**tices polymerized without any surface active**
**agent"**

**JOURNAL OF PAINT TECHNOLOGY, Bd. 42,**
**Nr. 541, Februar 1970, S. 71-75; J.S. DODGE**
**u.a. "Monodisperse Lactices II"**

**PATENT ABSTRACTS OF JAPAN, Band 8, Nr.**
**101 (P-273) (1538), 12. Mai 1984; JP-**
**A-59011552**

**BER. BUNSENGES. PHYS. CHEM. 89, 1985,**
**VCH Verlagsges., Weinheim, DE; Seiten**
**1179-1190; G.KÄMPF: "Polymere als Träger**
**und Speicher von Informationen"**

(73) Patentinhaber: **BASF Aktiengesellschaft**
**Carl-Bosch-Strasse 38**
**W-6700 Ludwigshafen(DE)**

(72) Erfinder: **Lamprecht, Josef, Dr.**
**Fohlenstrasse 5 d**
**W-6710 Frankenthal(DE)**
Erfinder: **Ley, Gregor, Dr.**
**In den Trankstuecken**
**W-6719 Wattenheim(DE)**
Erfinder: **Werner, Arend, Dr.**
**Kurbrunnenstrasse 26**
**W-6702 Bad Duerkheim(DE)**
Erfinder: **Barzynski, Helmut, Dr.**
**An der Ameisenhalde 49**
**W-6702 Bad Duerkheim(DE)**

## Beschreibung

Die Erfindung betrifft ein lichtempfindliches Aufzeichnungsmaterial zur Aufzeichnung von Informationen mittels lokaler Änderung der optischen Eigenschaften einer Aufzeichnungsschicht unter Einwirkung einer Lichtstrahlung hoher Energiedichte, ein Verfahren zu seiner Herstellung sowie die Verwendung dieses Aufzeichnungsmaterials.

Die bekannten Aufzeichnungsmaterialien zur Aufzeichnung von Informationen unter Anwendung einer intensiven Strahlungsquelle umfassen sowohl thermische als auch chemische Aufzeichnungsmaterialien.

Bei einigen thermischen Aufzeichnungsmaterialien hat die Aufzeichnungsschicht eine hohe optische Dichte im Wellenlängenbereich der Strahlung und absorbiert einen aufgestrahlten Lichtstrahl von hoher Energiedichte. Dadurch wird ein lokaler Temperaturanstieg verursacht, der eine thermische Verformung, beispielsweise durch Schmelzen, Abdampfen oder Aggregation, bewirkt. Infolgedessen werden die bestrahlten Teile entfernt oder ändern den optischen Charakter, beispielsweise durch Ausbildung einer Differenz der optischen Dichte gegenüber den unbestrahlten Teilen, wodurch die Lichtinformation aufgezeichnet wird. Aus diesem Grund gelangten die thermischen Aufzeichnungsmaterialien z.B. für lithographische Druckfilme, Faksimileaufzeichnungsmaterialien, Photomasken für integrierte Schaltungen (IC), Mikrofilme zur Anwendung.

Optische Aufzeichnungsmedien, bei denen die Aufzeichnungsschicht aus einem thermisch erweichenden organischen Polymerfilm besteht, und die Informationsspeicherung durch eine örtliche Verformung, Blasen- oder Lochbildung vorgenommen wird, sind u.a. in Phys. Chem. 89, 1179-1190 beschrieben. Es wurde auch schon vorgeschlagen (EP-A-230 240), Aufzeichnungsschichten aus dunklen Polymerteilchen herzustellen, welche eine hohe Absorption des eingestrahlten Lichts aufweisen, so daß sich an den Speicherstellen ebenfalls Löcher bilden.

Eine Zusammenfassung über chemische, thermographische Aufzeichnungsmaterialien findet sich in "Light Sensitive Systems", von J. Kosar, S. 402 ff, J. Wiley u. Sons, New York, London, Sydney (1965).

Auch dünne kohärente Metallschichten können als Aufzeichnungsmedium für hochenergetische Lichtstrahlung verwendet werden. Die hierfür bekannten Aufzeichnungsmaterialien bestehen im wesentlichen aus einem Trägermaterial und einer dünnen Schicht eines Metalls oder Halbmetalls, wie z.B. Bi, Sn, In, Al, Te oder Cr. Sie besitzen zwar eine hohe Auflösungsstärke und hohen Kontrast, haben aber eine Lichtreflektanz für z.B. Laserlicht von mehr als 50 %, so daß die Energie des Laserlichts nicht wirksam durch diese Aufzeichnungsmaterialien ausgenützt werden kann. Deshalb ist die zur Aufzeichnung erforderliche Lichtenergie groß und eine Laserlichtquelle von hoher Ausgangsleistung ist zur Aufzeichnung einer Hochgeschwindigkeitsrasterung erforderlich, wodurch die Aufzeichnungsvorrichtungen größer und kostspieliger werden.

Zur Erniedrigung der Reflektion einer kohärenten Halbleiter- bzw. Metallschicht und der daraus resultierenden Erhöhung der in der Schicht absorbierten Strahlungsleistung wurde in der EP-A 01 07 379 vorgeschlagen, ein durch Laserinterferometrie texturiertes Kunststoffsubstrat mit aufgedampfter Metallschicht zu verwenden. In ähnlicher Weise wird gemäß der EP-A25 253 vorgegangen. Auch hier wird ein mit Oberflächen-Diskontinuitäten versehenes Substrat mit einer amorphen Aufzeichnungsschicht beschichtet, in welcher sich dann bei einer Bestrahlung von der Substratseite Löcher bilden. Ein weiterer Vorschlag (Appl. Phys. Lett. 40, S. 622 ff. (1982)) betrifft eine durch Ionenätzen bewirkte Texturierung einer aufgedampften Ge-Schicht. Ferner ist noch die Texturierung durch Verwendung partikulärer Metall- bzw. Halbleiterschichten bekannt. So wird in der US-PS 4 252 890 ein photographisches Aufzeichnungsmedium beschrieben, das aus einer Monolage von niedrig schmelzenden Se-Partikeln mit ca. 0,2 $\mu$m Durchmesser besteht sowie in der EP-A-00 83 396 eine partikuläre Au-Schicht, bestehend aus aufgedampften Au-Inseln von ca. 10 nm Durchmesser.

Alle genannten Systeme erfordern jedoch sehr aufwendige Herstellungsverfahren, wie z.B. großflächige Laserhologramme und/oder komplizierte Ätztechniken. Nachteilig ist ferner die teilweise aus vielen Einzelschritten bestehende Fertigung der Systeme, die schlechte Reproduzierbarkeit sowie die komplizierte Handhabung. Einige Systeme erfordern darüber hinaus in recht nachteiliger Weise die Verwendung von toxischen und/oder wenig lagerstabilen Schichtmaterialien.

Aufgabe der vorliegenden Erfindung war es daher, ein lichtempfindliches Aufzeichnungsmedium bereitzustellen, das die genannten Nachteile vermeidet und eine reproduzierbare und gleichmäßige optische Aufzeichnung mit hoher Empfindlichkeit bei hohem Kontrast in weitem Spektralbereich erlaubt und außerdem in einfacher Weise herstellbar ist.

Es wurde nun gefunden, daß ein lichtempfindliches Aufzeichnungsmedium, im wesentlichen bestehend aus einem Träger, einer darauf befindlichen aus Partikel bestehenden Schicht aus nahezu kugelförmigen Teilchen und einer darüber aufgebrachten metallischen Schicht, zur Aufzeichnung von Informationen mittels lokaler Änderung der optischen Eigenschaften eines Bereichs unter Einwirkung einer Lichtstrahlung hoher Energiedichte durch Erweichen der auf dem Träger aufgebrachten, aus Partikel bestehenden Schicht und der dadurch bedingten Verformung der darüber befindlichen metallischen Schicht, den aufgabenmäßigen Anforderungen entspricht, wenn die nahezu kugelförmigen Teilchen der aus Partikel bestehenden Schicht aus einem bei Temperaturen von über 50° C erweichenden organischen Polymeren bestehen und einen mittleren Teilchendurchmesser von nicht mehr als 5000 nm aufweisen. In einer bevorzugten Ausführungsform bestehen die nahezu kugelförmigen Teilchen aus einem bei einer Temperatur zwischen 50 und 150° C erweichenden Polymeren und weisen einen mittleren Teilchendurchmesser zwischen 30 und 5000 nm und insbesondere zwischen 50 und 800 nm auf.

Die erfindungsgemäßen Aufzeichnungsmaterialien zeichnen sich durch keine oder gegebenenfalls nur geringe Reflektivität im gesamten Spektralbereich von 200 nm bis 2 μm, d.h. im UV, sichtbaren Bereich und nahem Infrarot, aus, wobei die Restreflektionsspektren von den verwendeten Metall- bzw. Halbmetallschichten sowie deren Dicke abhängen. Die Reflektivität des Aufzeichnungsmaterials erhöht sich jedoch drastisch unter der Einwirkung einer Lichtstrahlung hoher Energiedichte, wie z.B. Elektronenblitz oder Laser. Diese Änderung der Reflektivität beruht auf einem kurzzeitigen thermischen Erweichen und Zusammenfließen der kugelförmigen polymeren Teilchen, wodurch eine Veränderung der Oberflächenstruktur der darüberliegenden metallischen Schicht ausgelöst wird.

Als Trägermaterialien für die erfindungsgemäßen Aufzeichnungsmaterialien kommen flächige, dimensionsstabile Gebilde in Form von Scheiben oder Folien aus Glas, Polyester, Polystyrol, Polymethylmethacrylat, Polycarbonat, Polymethylpenten, Polysulfon, Polycarbonat, Polyimide, Polystyrolcopolymere, PVC-Copolymere, Celluloseester und andere Kunststoffe als auch polierte Metallplatten und Holz in Frage. Bevorzugt werden transparente Trägermaterialien mit geringer Wärmeleitfähigkeit.

Die die partikuläre Schicht bildenden Teilchen des erfindungsgemäßen Aufzeichnungsmaterials lassen sich aus den unterschiedlichsten Polymeren herstellen. In erster Linie kommen dafür thermoplastische Polymere in Betracht, die durch Polymerisation, Polykondensation oder Polyaddition zugänglich sind. Von den duroplastischen Materialien sind nur solche verwendbar, die aufgrund ihrer geringen Vernetzung bei Temperaturen von über 50° C noch ausreichend plastisch sind.

Annähernd kugelförmige Teilchen mit dem geforderten mittleren Teilchendurchmesser von nicht mehr als 5000 nm lassen sich aus diesen Kunststoffen nach recht verschiedenen Methoden herstellen. Breit anwendbar auf die unterschiedlichsten Thermoplaste sind z.B. die Verfahren der Zerteilung von mehr oder weniger konzentrierten Lösungen solcher Thermoplaste durch z.B. Verdüsen, Versprühen, Emulgieren, Dispergieren, Mahlen usw. Als Beispiel für die physikalisch-bestimmten Verfahren sei die Sprühtrocknung, für die chemisch-bestimmten die Herstellung sogenannter Sekundärdispersionen genannt. Bei letzterer läßt sich durch gezielte chemische Eingriffe, wie z.B. die Ionisierung von bereits bei seiner Synthese in bestimmter Konzentration in den Thermoplasten eingeführten Gruppen, die Emulgierung erzwingen und die mittlere Teilchengröße der Sekundärdispersionen steuern.

Eine Zwischenstellung nehmen solche Verfahren ein, bei denen der Einsatz physikalischer Zerteilungsverfahren mit dem Gebrauch chemischer Hilfsmittel kombiniert wird, wobei den Emulgatoren, Dispergiermitteln, Schutzkolloiden etc. meist die Aufgabe zufällt, den dispersen Zustand zu stabilisieren. Diese Verfahren sind außerordentlich variabel und können bekanntlich sowohl zur Herstellung entsprechender Teilchen mit homogener oder auch inhomogener innerer Struktur (z.B. Mikrokapseln) verwendet werden. Bei manchen dieser Verfahren erfolgen mindestens Teile der Herstellung der Kunststoffe im dispersen Zustand, wie z.B. bei der "Härtung", d.h. Molekülvergrößerung oder Vernetzung der Kapselwand bei den Mikroverkapselungsverfahren.

Bei einer anderen Gruppe von Verfahren wird der makromolekulare Kunststoff direkt in der benötigten Form annähernd kugelförmiger Teilchen aus seinen Bausteinen erzeugt. Zu diesen Verfahren gehören z.B. die Suspensions- und die Emulsionspolymerisation. Besonders geeignet für die Herstellung von Teilchen für die partikuläre Schicht ist die Emulsionspolymerisation, da sie bevorzugt Teilchen in dem benötigten Teilchengrößenbereich liefert, wegen ihrer großen technischen Bedeutung recht gut untersucht und verfahrensmäßig sehr einfach handhabbar ist. Sie wird daher auch als Verfahren zur Herstellung dieser Teilchen bevorzugt.

Für eine Übersicht über die Emulsionspolymerisation sei auf Houben-Weyl "Makromolekulare Stoffe" oder auf "Polymerisationstechnik" im Ullmann verwiesen. Monographien wie z.B. H. Gerrens, Kinetik der Emulsionspolymerisation, Fortschr. Hochpolym.-Forsch., Bd. 1 (1959) 234 - 328 oder J. Ugelstad, F.K. Hansen, Kinetics and Mechanism of Emulsion Polymerization, Rubber Chemistry Technol. 49 (1976) 536 - 609 geben einen guten Einblick in Theorie und Praxis der Verfahrens. Besonders wichtig für die Verwendung dieser Technik für die Herstellung dieser Teilchen für die partikuläre Schicht sind die einfache Einstellung des Erweichungspunktes des Polymeren durch Emulsionscopolymerisation entsprechender Anteile an technisch in hoher Reinheit verfügbaren Vinyl-und (Meth)-Acrylmonomeren und Styrol, die einfache, gut reproduzierbare Einstellung der mittleren Teilchengröße der resultierenden stabilen Dispersion nach den bekannten Regeln der Emulsionspolymerisation sowie die relativ einfache Züchtung von Dispersionen mit sehr enger Teilchengrößenverteilung (sog. monodisperse Dispersionen), deren Teilchen sich bei höherer Konzentration vielfach bereits spontan zu makroskopischen geordneten Verbänden, "Latexkristallen", anordnen können.

Bezüglich der Arbeitstechniken zur Herstellung "monodisperser" Teilchen des bevorzugten Teilchengrößenbereichs sei u.a. auf I.M. Krieger et al. J. Paint Technol. 40 (1967) 545, ibid. 42 (1970) 71 und 571,
A. Kotera et al. Kolloid Z., Z. f. Polymere 239 (1970) 677 und
J. Ugelstad, US-Patent 4 336 173 verwiesen.

Das Aufbringen der partikulären Schicht auf das Trägermaterial geschieht durch bekannte Verfahren wie Tauchen, Schleudern, Sprühen oder Rakeln. Bevorzugt sind Schleuderbeschichtungsverfahren aus einer wäßrigen Emulsion, welche gegebenenfalls mit wassermischbaren organischen Lösungsmitteln verdünnt werden. Die Schichtdicke der partikulären Schicht wird im wesentlichen durch Variation der Teilchenkonzentration und der Umdrehungsgeschwindigkeit eingestellt. Sie beträgt üblicherweise eine Monolage der nahezu kugelförmigen Teilchen. Es sind jedoch auch Schichtdicken bis zu 5 Monolagen unschwer einzusetzen.

Diese partikuläre Schicht wird nun mit einem dünnen Film eines Materials beschichtet, das in dem interessierenden Wellenlängenbereich eine hohe Reflektivität und hohe Absorption aufweist. Vorzugsweise wird ein Metall oder Halbmetall verwendet, wie z.B. Au, Ag, Al, Cu, Bi, Sn, Sb, Pt, Ni, Te oder andere. Die Dicke dieser Metallschicht richtet sich nach der Anwendung und der geforderten Empfindlichkeit des Aufzeichnungsmaterials. Eine dünne, etwa 10 nm dicke Au-Schicht ist sehr duktil und behindert die Formänderung der partikulären Schicht am Übergang zwischen den beiden Schichten während der Belichtung nur geringfügig. Dafür ist die Transmission des Aufzeichnungsmediums aber deutlich höher als 0. Eine dicke Au-Sicht von etwa 0,1 $\mu$m senkt die Transmission auf 0, behindert dafür aber die Verformung der partikulären Schicht am Übergang zwischen den beiden Schichten bei der Belichtung. Die Schichtdicke der Metallschicht ergibt sich daher aus den optischen und mechanischen Daten des verwendeten Materials. Vorzugsweise liegen die Dicken im Bereich von 10 nm bis 0,1 $\mu$m, es sind aber auch wesentlich dickere Schichten brauchbar.

Die Aufbringung der Metallschicht erfolgt vorzugsweise durch Hochvakuumbedampfung. Daneben lassen sich aber auch andere Beschichtungsverfahren, wie z.B. Kathodenzerstäubung oder CVD heranziehen.

Die erfindungsgemäßen Aufzeichnungsmaterialien sing für eine Vielzahl von Anwendungen geeignet, so für die Herstellung von Leiterstrukturen und Widerstandsstrukturen im Mikrobereich, Mikrofilmaufzeichnungen, Mustern für integrierte Schaltkreise, optischen Datenspeichern, gedruckten Schaltungen, dekorativen und anderen Anwendungen.

Die Belichtung der erfindungsgemäßen Aufzeichnungsmaterialien erfolgt mit Lichtquellen im Wellenlängenbereich von 200 nm bis 2 $\mu$m und einer Energie der auftreffenden Strahlung von mindestens 0,1 J/cm$^2$ und bis zu 10 J/cm$^2$, wobei diese Obergrenze nicht den Funktionsbereich des lichtempfindlichen Aufzeichnungsmaterials darstellt, sondern nur den technisch vernünftigen Aufwand umfaßt. Geeignette Strahlungsquellen sind Blitzlichtgeräte, Quecksilberlampen, Xenonhochdrucklampen, Gaslaser, wie z.B. Helium/Neon-Argon-, Krypton-, Argon- und Kryptonfluorid-Laser, Halbleiterlaser, wie z.B. Ga-Arsenid-Laser, Nd-YAG-Laser, Farbstoff-Laser.

Die Herstellung der bildmäßig strukturierten Produkte beinhaltet keinen Naßentwicklungsschutz. Dies ist besonders vorteilhaft hinsichtlich hoher Auflösung und Umweltverträglichkeit.

Der Aufbau der erfindungsgemäßen Aufzeichnungsmaterialien aus Trägermaterial, partikulärer Schicht und metallischer Schicht kann noch durch zusätzliche Schichten, wie Interferenzkontrollschichten, dielektrische Schichten und Abstandsschichten erweitert werden. Auch können zwei erfindungsgemäße Aufzeichnungsmaterialien sandwichartig miteinander verbunden sein.

Der im einzelnen geforderte Schichtaufbau ergibt sich aus dem angestrebten Verwendungsgebiet.

Da eine wesentliche Eigenschaft des erfindungsgemäßen Aufzeichnungsmaterials die drastische Reduktion der Reflektivität der metallischen Schicht ist, ergibt sich eine weitere wichtige Anwendung, die nicht mit einer bildmäßigen Belichtung zusammenhängt. Es ist die Anwendung zur Reflexionsminderung optischer Oberflächen, wie z.B. Glasscheiben, Abdeckungen von Fernsehbildröhren und Displays.

Die Erfindung wird anhand folgender Beispiele veranschaulicht.

Beispiel 1

Das optische Aufzeichnungsmedium besteht aus einer PMMA-Platte mit einem Durchmesser von 12 cm und einer Dicke von 1,2 mm, einer aufgeschleuderten Schicht aus Polystyrolkugeln mit einem Kugeldurchmesser von 0,2 $\mu$m, aufgetragen aus einer 20%igen Polystyroldispersion in Wasser/n-Propanol mit 1 % PVA und aufgedampfter 50 nm dicker Au-Schicht. Durch das PMMA-Substrat im Auflicht betrachtet sieht das Aufzeichnungsmedium dunkelbraun aus, von der metallisierten Rückseite beim Auflicht betrachtet sieht das Aufzeichnungsmedium wie ein dunkler Au-Spiegel aus. Belichtet man die Schicht mit einem Elektronenblitz ( 10 nJ/$\mu$m$^2$) durch das PMMA-Substrat, bzw. von der Rückseite, so tritt in beiden Fällen die gleiche Veränderung auf: Die dunkelbraune Färbung bei Betrachtung durch das PMMA-Substrat wird hellbraun, d.h. die Reflektivität wird deutlich erhöht. Erfolgt die Belichtung durch eine Vorlage, so wird die Vorlage vom Aufzeichnungsmedium reproduziert.

## Beispiel 2

Es wurde eine PMMA-Platte wie in Beispiel 1 beschrieben hergestellt, wobei statt Gold eine 50 nm dicke Al-Schicht aufgedampft wurde. Durch das PMMA-Substrat im Auflicht betrachtet sieht das Aufzeichnungsmedium bläulich aus, von der metallisierten Rückseite betrachtet sieht das Aufzeichnungsmedium blaß-silber aus. Belichtet man die Schicht mit einem Elektronenblitzgerät ( 10 nJ/$\mu$m$^2$) durch das PMMA-Substrat, bzw. von der Rückseite, so wird die bläuliche Färbung bei der Betrachtung durch das PMMA-Substrat in dunkelgrau verwandelt, d.h. es tritt eine deutliche Minderung der Reflektivität ein. Erfolgt die Belichtung durch eine Vorlage, so wird die Vorlage vom Aufzeichnungsmedium reproduziert.

## Beispiel 3

Es wurde ein Aufzeichnungsmaterial wie in Beispiel 1 beschrieben hergestellt. Die Belichtung erfolgte mit einem Krypton-Laser (647 nm, 100mW, Fokusdurchmesser 100 $\mu$m) durch die PMMA-Schicht, wobei das Aufzeichnungsmaterial mit einer Geschwindigkeit von 1,3 cm/sec bewegt wurde. Die Belichtungsenergie von 100 nJ/$\mu$m$^2$ bewirkte eine Änderung der Reflektivität wie in Beispiel 1 beschrieben.

## Beispiel 4

Ein gemäß Beispiel 1 hergestelltes Aufzeichnungsmaterial wurde mit einer Maske, die ein Strichmuster aufwies, belegt und anschließend mit einem Elektronenblitz belichtet. Da die Polystyrolkugeln in den belichteten Bereichen untereinander bzw. mit dem PMMA-Substrat verschmolzen, wurde die Haftung der Metallschicht auf dem Trägermaterial gegenüber den unbelichteten Bereichen stark erhöht. Wird jetzt der bildmäßig belichtete Teil des Aufzeichnungsmediums auf der metallisierten Seite mit einer transparenten selbstklebenden Folie beklebt, so verbleiben nach Abziehen der Folie die belichteten Teile auf dem PMMA-Substrat und der Metallfilm der unbelichteten Bereiche ist auf die Folie übertragen. Aufgeklebt auf eine weiße oder transparente Unterlage wird eine scharfe und sehr kontrastreiche Kopie der Hell-Dunkel-Vorlage erhalten.

## Beispiel 6

Die Vorgehensweise gemäß Beispiel 4 wurde dadurch abgeändert, daß eine Leiterbahnstruktur direkt mit einem Laserstrahl eingeschrieben wurde. Auf diese Weise lassen sich Leiterbahnbreiten bis hinab zu 10 $\mu$m erzielen.

## Beispiel 7

Eine mit spiraligen Spurrillen (1,6 $\mu$m Abstand) versehene Polycarbonatscheibe von 130 mm Durchmesser und 1 mm Dicke sowie einem Innenloch von 15 mm Durchmesser wurde durch Schleuderbeschichtung mit einer 20% Polymethylmethacrylatdispersion (Teilchendurchmesser 0,05 $\mu$) in Wasser/n-Propanol so beschichtet, daß nach dem Abschleudern des Wassers eine Schicht von 70 nm verblieb. Auf diese Schicht wurde nun eine 50 nm dicke Au-Schicht aufgedampft. 2 solcher Platten wurden mit Hilfe von 0,5 mm dicken, haftklebenden Abstandsringen sandwichartig verbunden.

Auf den so erhaltenen optischen Datenspeicher wurden mit einem Laser (820 nm Wellenlänge) punktförmig digitale Daten aufgezeichnet, wobei bei einer Schreibleistung von 9,5 mW die Schreibschwelle bei 1 nJ pro Marke lag.

## Patentansprüche

1. Lichtempfindliches Aufzeichnungsmedium, im wesentlichen bestehend aus einem Träger, einer darauf befindlichen, aus Partikel bestehenden Schicht und einer darüber aufgebrachten metallischen. Schicht, zur Aufzeichnung von Informationen mittels lokaler Änderung der optischen Eigenschaften eines Bereichs unter Einwirkung einer Lichtstrahlung hoher Energiedichte, durch Erweichen der auf dem Träger aufgebrachten, aus Partikel bestehenden Schicht und der dadurch bedingten Oberflächenstrukturänderung der darüber befindlichen metallischen Schicht, dadurch gekennzeichnet, daß die nahezu kugelförmigen Teilchen der aus Partikel bestehenden Schicht aus einem bei Temperaturen von über 50°C erweichenden organischen Polymeren bestehen und einen mittleren Teilchendurchmesser von nicht mehr als 5000 nm aufweisen.

2. Lichtempfindliches Aufzeichnungsmedium gemäß Anspruch 1, dadurch gekennzeichnet, daß die nahezu kugelförmigen Teilchen der Schicht aus einem bei einer Temperatur zwischen 50 und 150°C erweichenden organischen Polymeren bestehen und einen mittleren Teilchendurchmesser von 30 bis 5000 nm aufweisen.

3. Verfahren zur Herstellung der lichtempfindlichen Aufzeichnungsmedien gemäß Anspruch 1, dadurch gekennzeichnet, daß der Träger mit einer nahezu kugelförmige Teilchen aufweisenden Polymerdispersion beschichtet wird, diese Dispersion verfestigt und anschließend die Metallschicht aufgebracht wird.

4. Verwendung des lichtempfindlichen Aufzeichnungsmediums gemäß Anspruch 1 zur Bildaufzeichnung durch Belichten des Aufzeichnungsmediums mit Licht der Wellenlänge zwischen 200 nm und 2 $\mu$m und einer Energie der auftreffenden Strahlung von mindestens 0,1 J/cm$^2$.

5. Verwendung des lichtempfindlichen Aufzeichnungsmediums gemäß Anspruch 1 als irreversibler optischer Datenspeicher.

## Claims

1. A photosensitive recording medium, essentially consisting of a base, a layer consisting of particles which is present on the said base, and a metallic layer applied on top of this, for recording information by means of a local change in the optical properties of an area under the action of light having a high energy density, by softening of the layer applied on the base and consisting of particles and the consequent change in the surface structure of the metallic layer present thereon, wherein the virtually spherical particles of the layer consisting of particles consist of an organic polymer having a softening point above 50°C and have a mean particle diameter of not more than 5000 nm.

2. A photosensitive recording medium as claimed in claim 1, wherein the virtually spherical particles of the layer consist of an organic polymer having a softening point of from 50 to 150°C and have a mean particle diameter of from 30 to 5000 nm.

3. A process for the preparation of a photosensitive recording medium as claimed in claim 1, wherein the base is coated with a polymer dispersion containing virtually spherical particles, this dispersion is compacted, and the metal layer is then applied.

4. Use of a photosensitive recording medium as claimed in claim 1 for image recording by exposure of the recording medium to light having a wavelength of from 200 nm to 2$\mu$m and an energy of the incident radiation of not less than 0.1 J/cm$^2$.

5. Use of a photosensitive recording medium as claimed in claim 1 as an irreversible optical data store.

## Revendications

1. Milieu d'enregistrement photosensible, consistant essentiellement en un support, une couche appliquée sur ce support et consistant en particules et une couche métallique appliquée sur la couche précédente, pour l'enregistrement de données par variation locale des propriétés optiques d'une région sous l'action d'un rayonnement de lumière à haute densité d'énergie, par ramollissement de la couche consistant en particules, appliquée sur le support et la modification de structure superficielle en résultant pour la couche métallique placée au-dessus, caractérisé en ce que les particules de forme à peu près sphérique de la couche consistant en particules consistent elles-mêmes en un polymère organique qui se ramollit aux températures supérieures à 50 degrés C et ont un diamètre de particule moyen ne dépassant pas 5 000 nm.

2. Milieu d'enregistrement photosensible selon la revendication 1, caractérisé en ce que les particules de forme à peu près sphérique de la couche consistent en un polymère organique se ramollissant à une température allant de 50 à 150 degrés C et ont un diamètre de particule moyen de 30 à 5 000 nm.

3. Procédé de préparation des milieux d'enregistrement photosensibles selon la revendication 1, caractérisé en ce que l'on revêt le support par une dispersion de polymères à particules de forme à peu près sphérique, on solidifie cette dispersion puis on applique la couche métallique.

4. Utilisation du milieu d'enregistrement photosensible selon la revendication 1 pour l'enregistrement d'images par exposition de ce milieu à une lumière de longueur d'onde comprise entre 200 nm et 2 $\mu$m et d'une énergie du rayonnement incident d'au moins 0,1 J/cm$^2$.

5. Utilisation du milieu d'enregistrement photosensible selon la revendication 1 en tant que mémoire optique irréversible de données.